# EUROPEAN PATENT SPECIFICATION

(11) **EP 2 353 255 B1**
(45) Date of publication and mention of the grant of the patent: **31.10.2012**
(21) Application number: 09788387.0
(22) Date of filing: 11.09.2009
(51) Int. Cl.: H04L 12/40, H04L 12/42

(54) **A DEVICE AND SYSTEM PROVIDING INCREASED OPERATIONAL SAFETY OF AN INSTRUMENTATION LOOP SYSTEM**
EINRICHTUNG UND SYSTEM ZUR BEREITSTELLUNG VON ERHÖHTER BETRIEBSSICHERHEIT EINES INSTRUMENTATIONSSCHLEIFENSYSTEMS
DISPOSITIF ET SYSTÈME FOURNISSANT UNE PLUS GRANDE SÉCURITÉ DE FONCTIONNEMENT D'UN SYSTÈME DE BOUCLE D'INSTRUMENTATION

(30) Priority: 12.09.2008 NO 20083912
(43) Date of publication of application: 10.08.2011
(73) Proprietor: AUTRONICA FIRE AND SECURITY AS, 7483 Trondheim (NO)
(72) Inventor: TEIG, Øyvind, N-7014 Trondheim (NO); VANNEBO, Per, Johan, N-7050 Trondheim (NO)
(74) Representative: Chiva, Andrew Peter
(86) International application number: PCT/NO2009/000319
(87) International publication number: WO 2010/030192

(56) References cited:
- US-A1- 2005 091 394
- US-A1- 2008 219 238
- US-B1- 7 360 086

## Description

### Field of the invention

The present invention is related to the field of instrumentation loop systems, and especially to a device providing an interface function adapted to physical communication sections of the loop and communication protocols used in the loop system.

### Background of the invention

Instrumentation systems comprising a communication loop is known in prior art. Such communication solutions makes it easy to connect for example a cable in a daisy chain fashion between different types of electronic devices, for example fire alarm devices, burglar alarm devices etc. This scheme simplifies installation and hence the cost of the system. However, the use of such systems may pose a problem since a broken (or short circuit condition in the loop) loop may for example stop a fire alarm system to function properly. In many cases this is undesirable for example due to conditions of an insurance certificate. Safety measures on board for example ships are a regulatory measure imposed in all jurisdictions around the world. Insurance policy requires also that ships usually are approved according to a classification standard. Recently there is a an approach in the maritime world to provide safety measures on board ships that enables what is called "Safe Return to Port". This requirement establishes among other demands that if a controlling unit of a safety system falls out, for example due to fire in a section of the ship comprising the controlling unit, the safety loop interconnecting the safety devices should pass control to another controlling unit in another section of the ship not under fire. The technical meaning of the principle "Safe Return to Port" is that many or all safety systems on board should function even if parts of a ship is burning or has burned out, or due to other technical reasons. It means that the ship should have redundancy in the controlling systems such that the controlling function of the control loop interconnecting the safety devices never stops functioning. This requires that the loop bypasses the section that has been damaged, and that the rest of the functioning safety devices establish an interconnection in a new "smaller" loop. It also requires that power will be available to all remaining units in the safety system.

Safety devices such as smoke and/or fire detectors or other types of instrumentation devices in loop systems may be individually or collectively addressable in the loop connected configuration as known in prior art. Such devices can be wired with other units, for example a plurality of other smoke and/or fire detectors. A controlling unit or loop controller can initialize such devices by sending commands on the interconnecting wires, wherein the commands comprises an address field comprising a specific address of a unit for example, as known to a person skilled in the art. Other operational aspects of such devices can be to send alarms to the loop controller when smoke or fire.is detected, or there is a polling scheme executed by the controller that regularly polls the status of each respective safety device or instrumentation device connected in the loop. Prior art loops may comprise two wire pairs, one pair for power and the other pair for a serial communication line - or a single wire pair carrying both power and communication. There are many known protocols available in prior art for establishing a working scheme for the issue of commands from the controller, address schemes etc. on such a topology. When there are more than one loop controller present in the system, one controller is usually given the role as a main controller, while the other remaining controllers are in another operational state or there are more than one main controller in the system which implies that there will be an arbitration between controllers about which one of the controllers that will gain control of the loop system. There can also be a handover scheme of control between controllers, for example the control can be handed over as a result of exchange of signals which can be dedicated signal lines, or information about the handover is coded in formatted messages signalled between the controllers.

In prior art the solution to the safety issue of the safety system itself (for example "Safe return to port"), is to provide a duplication of both controllers and devices connected in the loop. This is an expensive solution, and there is also an inherent limit in this principle to which extent duplication can be achieved, and hence a fire or safety situation can exist wherein the ship for example looses the safety system completely. In this situation the ship may still be floating, and even have power to move forward to port, but without any functional safety system for the rest of the journey home to port, and the sailing may be considered to be too unsafe and is therefore abandon.

US 2005091394 discloses a system having a redundant topology for communication between one or more devices and a central hub. The system comprises a central hub or switch and one or more end nodes where each end node includes a first port and a second port. A first active cable is connected to the first port in each end node and a first port in the hub and, a second active cable is connected to the second port in each end node and a second port in the hub. Messages are transmitted across both the first and second cables to the first and second ports of the end nodes. The end node performs an integrity check on the messages received over the first and second cables and utilizes the first one to pass the check. Thus, if one cable malfunctions, the end node still is able to receive the message over the other cable without any loss of data.

US7360086 discloses a LAN switch which is one component of a communications network system composed of a virtual LAN having network terminals such as personal computers connected with ports respectively. The LAN switch provides a host table for holding correspondence between each port and address information of the network terminal connected to each port and an authentication table for holding information for authenticating a user of each network terminal. If a request takes place of changing the correspondence about the source network terminal held in the host table when relaying the packets, the LAN switch prompts a user name and a password for the source network terminal, does user authentication on the basis of the information held in an authentication table, and enables rewrite of the host table and relay of the packets if the user is correct. These processes are executed for easily preventing false use of an address or tapping or false access by a malignant user as well as analyzing or recovering the erroneously set address.

### Summary of the invention

According to an aspect of the present invention, the solution to the safety issue of the loop system itself is to provide a loop device in a loop topology providing an interface between controllers, devices etc. and communication sections of the loop interconnected to the loop device, wherein the loop device either may bypass sections of the loop connected to the loop device and/or makes a controller connected to the loop device as the main controller of the loop system. If a plurality of controllers can control the loop, the loop device may participate in an arbitration process between controllers.

The present invention may also be used in off-shore installations or at other safety critical installations, for example no or short down-time may be a critical parameter in many different types of installations.

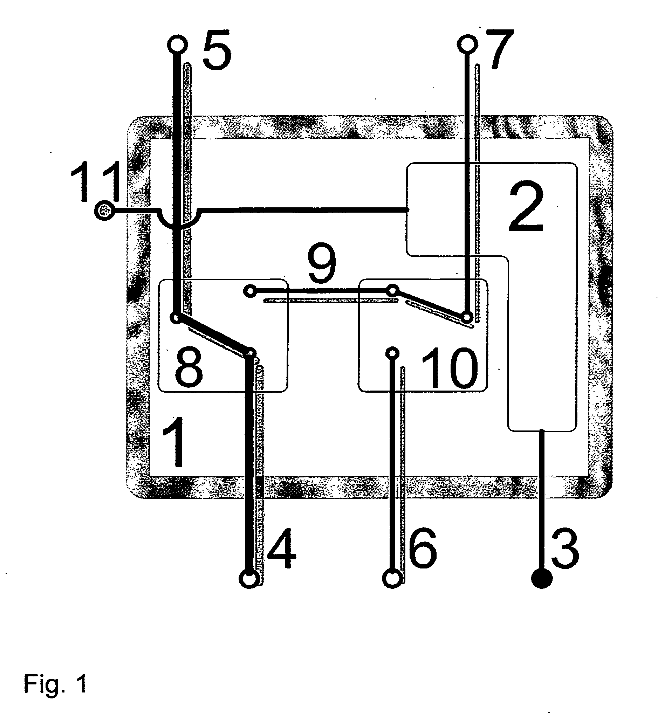

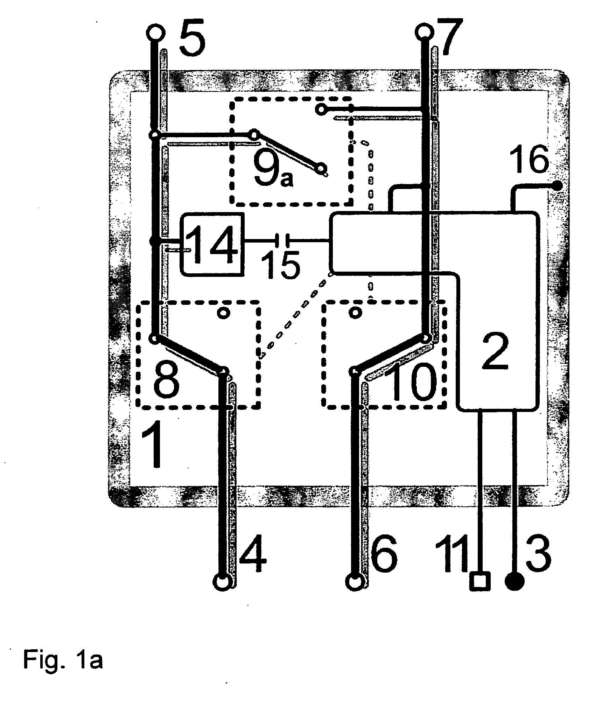

According to an example of embodiment of the present invention, with reference to figure 1, a loop device comprising an interface function adapted to physical communication sections and communication protocols of an instrumentation loop system or a safety loop system or similar type of loop system comprises for example:
a first loop data port 7 providing a connection terminal for a specific physical communication section of the loop connected to the loop device, a second loop data port 5 providing a connection terminal for another specific physical communication section of the loop connected to the loop device, and
the interface function of the loop device comprises further a first controller data port 6, a second controller data port 4, and a controller port 3 in communication with an internal loop device controller 2,
at least two relays 8, 10 which can respectively be controlled by respective control signals from the internal controller 2, wherein the at least two relays 8, 10 provides a connection of physical communication channels between respective data ports 4, 5, 6, 7, wherein the physical communication channels provided for by the at least two relays 8, 10 is from the set of combinations comprising:
   a) the second loop data port 5 is electrically connected to the second controller data port 4,
   b) the first loop data port 7 is electrically connected to the first controller data port 6,
   c) the second loop data port 5 is electrically connected to the first loop data port 7 via an internal connection 9,
   d) the second loop data port 5 is electrically connected to the second controller data port 4 and then first loop data port 7 is electrically connected to the first controller data port 6 at the same time,
   whenever the loop device is configured to be in the first state the connection alternative d) is used, when the loop device is configured to be in the second state connection alternative c) is used. The first state can be used for example when the loop device is connected to a loop controller as the main controller. The second state can be used to bypass a section of the loop for example.

According to yet another example of embodiment of the present invention, the loop device may be configured such that the internal loop device controller 2 communicates and listens to other ports of the loop device. For example, ports 4, 5 are used. Generally, the ports on the loop device according to the present invention may be configured as required for the end use of the loop device. A plurality of ports, interconnections and modules may have the principle structure as depicted in figure 1.

According to yet another example of embodiment of the loop device according to the present invention, the loop device comprises a plurality of ports and a plurality of relays enabling cross connections between ports as required by a system connected to the loop device.

According to another example of embodiment of the present invention, data in the data traffic being present in a port in the loop device is analysed by the internal controller, wherein the analysis can trigger a transition from the first state to the second state, or vice versa, dependent on a status of the analysed data and the initial state of the loop device.

According to yet another example of embodiment of the present invention, the loop device is arranged to provide arbitration between at least two loop controllers when each respective loop device connected to each respective loop controller each respectively is configured in the first state.

### Brief description of the drawings

Figure 1 illustrates an example of embodiment of a device according to the present invention.
Figure 1a illustrates another example of embodiment of a device according to the present invention.
Figure 2 illustrates yet another example of embodiment of the present invention.
Figure 2a illustrates a system according to an embodiment of the present invention, which system includes a plurality of devices of the type illustrated in figure 1a.
Figure 3 illustrates an example of a layout of a control loop according to the present invention.
Figure 4 illustrates an example of fire in a section of the system in figure 3.
Figure 5 illustrates another example of fire in sections in figure 3.

### Detailed description

An example of embodiment of the present invention is illustrated in fig. 1. This example of embodiment comprises two relays 8, 10 having an internal connection possibility between them via an internal connection 9. Physical communication segments of a loop system can be connected to adapted connectors 5 and 7 denoted loop data ports. It is within the scope of the present invention that the physical means constituting the loop can be a cable, fibre optics systems, infrared systems, wireless systems or similar types of physical means for a communication system such as a loop system. In addition, the number of signal lines in the communication segments of the loop is not limited by any other design constraints other than what is practical to implement as known to a person skilled in the art. In addition there are other ports 4 and 6 denoted controller data ports. The relays 8, 10 can be used to establish electrical connections between respective ports 4, 5, 6 and 7. An internal loop device controller 2 is adapted to listen to external data traffic, for example traffic in the loop data port 7. The internal loop controller 2 is in communication with external systems or devices via a controller port 3. A loop controller system externally to the loop device can communicate with the loop device, for example when initialising the loop device to be configured in a specific configuration. According to an example of embodiment of the present invention, the loop device can be configured to be in a first state or a second state, wherein a state is characterized by how the relays 8, 10 are specifically switched, i.e. the position of the relay terminals. The relays 8, 10 are controlled by signals from the internal controller 2. The internal controller 2 can be a microcontroller having embedded instructions in an embedded memory, or the instructions can be transferred from an external memory via connections to the controller port 3. In another example of embodiment of the present invention, the internal controller system is located externally relative to the loop device controller, and the control signals generated for controlling the loop device functionality may be provided for via the controller port 3. In yet another example of embodiment of the present invention, commands may be issued by other loop devices (or from a loop controller via a connected loop device) which can be interpreted on a data port, for example the loop data port 7 which then is decoded by the internal loop device controller 2.

In an example of embodiment of the present invention, the following positions of the relays 8, 10 are possible providing the following set of possible connections between the ports 4, 5, 6 and 7:
a) the loop data port (5) is electrically connected to the controller data port (4),
b) the loop data port (7) is electrically connected to the controller data port (6),
c) the loop data port (5) is electrically connected to the loop data port (7) via an internal connection (9),
d) the loop data port (5) is electrically connected to the controller data port (4) and the loop data port (7) is electrically connected to the controller data port (6) at the same time,
whenever the loop device is configured to be in a first state the connection alternative d) is used, when the loop device is configured to be in a second state connection alternative c) is used.

An aspect of the present invention is that the controller data ports 4, 6 and the controller port 3 may be in communication with a controller system or device, for example a safety device such as a smoke detector etc. having corresponding ports. Such controllers can be for an instrumentation system, fire alarm system, burglar alarm system, processing plant system or similar type of system. The loop device can be integrated into such a controller systems, for example embodied as an integrated circuit.

According to another aspect of the present invention, the loop device comprises a plurality of ports and a plurality of relays enabling cross connections between ports as required by a system connected to the loop device.

The internal loop device controller 2 (or a correspondingly arranged controller located externally to the loop device communicating via the controller port 3), can be configured to perform method steps according to a communication protocol. With respect to such communications protocols, prior art has many examples of communication protocols that can be used in a loop system, for example for serial line communication such as the Serial Line Internet Protocol (SLIP). According to an example of embodiment of the present invention, a loop device is arranged with an address which can be arranged as a physical address, which also can be assigned as a logical address, be assigned as a broadcast address etc. or being a dip switch selectable address provided for by a switch arrangement located externally to the loop device. The switch settings can be communicated to the loop device, for example via the controller port 3, or via a separate dedicated port. Dependent on a protocol specification a loop device can be addressed by other devices connected to the loop system by specifying for example the physical address of the loop device in a data field communicated in the loop. For example, the SLIP protocol has an application layer that facilitates such operations. Generally, a loop device can listen to formatted data in the loop, for example by listening to data present in the loop data port 7, or any other port in communication with the loop, and whenever a physical address field is detected among the formatted data present, the internal loop device controller 2 can compare this address with its own predefined address (for example a DIP switch selected address) and then decide if the loop device itself is addressed or not. According to an example of embodiment of the present invention addresses may be dynamically configured. If the loop device is addressed, further interpretation of formatted data present in the data port can be done to decode which action to be taken by the addressed loop device, for example. For example, a transition from the first state to the second state, or vice versa, or there is an alarm condition in the formatted data etc. The internal loop device controller 2 can be arranged to handle all aspects of the implemented protocol in the loop, or the internal loop device controller 2 can signal detected or decoded messages to a connected loop controller via the controller port 3, for example. Examples of data related to actions that can be present in the formatted data in the data port is an alarm condition (fire alarm, burglar alarm etc.) or another loop controller is communicating via a similar arranged loop device to another controller in the loop. Actions that can result from this communication can for example be to handover a main controller function of the loop from one controller to another. Other examples could be information exchange related to arbitration between controllers.

A further aspect of the present invention is that a loop device that receives formatted data passes such data further in the loop if the formatted data is not addressed to the loop device itself. According to yet another aspect of the present invention the loop topology may be wired as a bus like structure wherein all devices connected to the "bus" listens to the same content and picks up data if the device is addressed as identified in an address field of the formatted data.

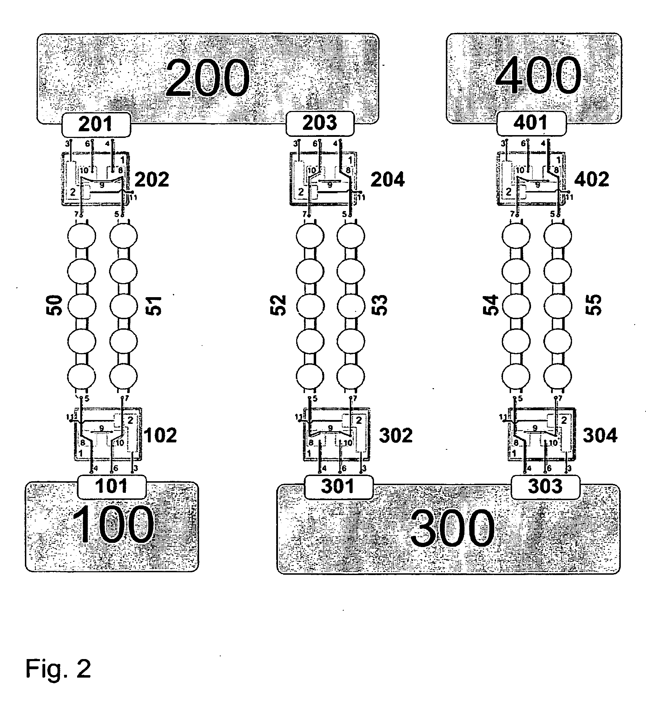

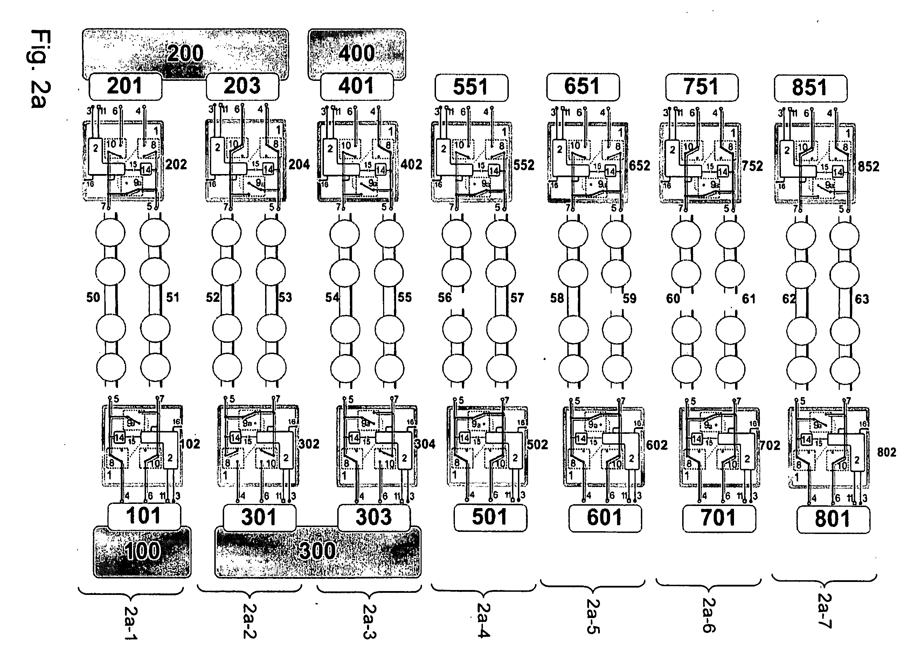

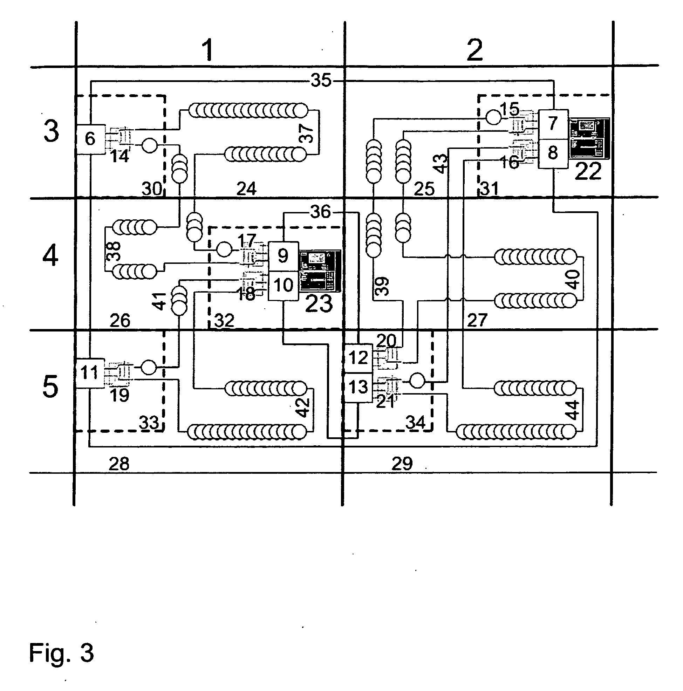

One particular interesting application of the loop device according to the present invention is to use the loop device in a safety loop system on board a ship. Figure 2 illustrates an example of layout or topology of such a system. With reference to figure 2, loop controllers 100, 200, 300, 400 are all connected to respective physical communication sections 50, 51, 52, 53, 54, 55 via respective loop devices 102, 202, 204, 302, 304, 404 according to the present invention. In this example of embodiment the loop device is arranged as a "piggy back" device releasable clamped on corresponding contacts 101, 201, 203, 301, 303, 401 of the respective controllers 100, 200, 300, 400. As can be seen in figure 2, the loop device102 connects the communication segments 50, 51 to respective loop ports 5 and 7, and the loop device is further connected to respective ports 4, 6 and 3. The relays 8, 10 are positioned such that there is an electrical connection from the loop data port 5 to the controller data port 4, and loop data port 7 is electrically connected to controller data port 6. The loop controller 202 is also connected to respective loop communication sections 50, 51. However, the loop device 202 is configured to connect the loop data port 7 to loop data port 5 via the internal connection 9 of the loop device 202. In this respect, the controller 200 is bypassed by the configuration of the loop device 202. However, the loop device 202 may listen to data present in for example the loop data port 7. In an example of embodiment of the present invention, the loop controller 100 is the main controller of the loop 50, 51 and the connected loop device 102 is configured to transmit a coded signal or message or data packet according to a specific protocol in this specific loop system implemented according to method steps implemented in the internal loop device controller 2, which may be interpreted as a "I am alive" type of signal. This signal is issued at periodic time intervals for example, and the loop device 202 is configured to listen to data present in for example data port 7, and the internal loop device controller 2 in the loop device 202 is configured to identify if this "I am alive" signal times out. The reason for this signal to time out can be that the loop controller system 100 looses power. This may be detected by the loop device 102 (which may have power from the loop itself) by listening to data present for example in the controller port 3. The loop device 202, in the second state, may also be able to detect power loss from contact 101 by sensing the voltage, and for an intermediate period test-power the loop (via 11), and if power is failing permanently, then loop device 202 will connect contact 201 to take over powering and then 200 will control the loop units in 50-51. Other reasons why the controller 100 stops functioning can be that a fire has started in the location wherein the loop controller 100 is located. For example, on board a ship there is usually a division of the internal space into fire secured sections in the meaning that if a fire starts inside a section there are arrangements been made to stop the fire to spread to other sections. In the example of embodiments illustrated in figures 3-5, typical topologies of a safety system on board a ship is illustrated. In figure 2, the loop controller systems 100, 200, 300 and 400 are located inside respective fire secured zones, while the connecting parts 101, 201, 203, 301, 303 and 401 feeds signals from the respective loop controller systems to each of the respective loop devices 102, 202, 204, 302, 304 and 402, which are all located in other fire secured sections. Therefore a fire that destroys the loop controller 100 will not affect the connected loop device 102, at least immediately. The loop device 102 can therefore detect any condition being the reason for the stop of the operation of the loop controller 100. Whenever this situation arise the loop device 102 stops sending the "I am alive" signal which is then identified by the internal loop device controller 2 in the loop device 202. The loop device 202 reacts to this identification by changing the configuration of the loop device such that the port 7 is connected to the port 6, and the port 5 is connected to the port 4. Further, the loop controller 202 can be informed about this shift of configuration by a command or information transmitted from the internal loop device controller 2 via the controller port 3. Further, the loop device 202 can also send addressed commands to the loop device 102 which can trigger the internal loop device controller 2 in the loop device 102 to change configuration such that the loop controller 100 is bypassed in the loop (port 5 connected to port 7 via internal connection 9). In this simple manner the control of the loop has been transferred from the loop controller 100 to the loop controller 200. As can be seen from figure 2, a loss of interconnection in the communication sections, for example in section 51 due to a broken or short circuited communication section (such conditions can be distinguished and detected by for example a current limited diode in the loop as known to a person skilled in the art) can be detected by both the respective loop devices 102, 202. In this situation the loop controller 202 can provide a connection for a part of the broken loop section 51 to the loop controller 200, while the loop device 102 provides a connection of the rest of the loop to the loop controller 100 via appropriate settings of the respective relays 8, 10 in each respective loop device 102, 202. The other loop sections 52, 53, 54, 55 and corresponding loop devices 203, 301, 303 and 404 may be operated as detailed above in this example of embodiment.

Generally, the loop device according to the present invention is selectable configurable to be in a first state or a second state. For example, the first state can correspond to a connection of the loop device to a main loop controller. The second state can be the above illustrated bypass condition.

According to another example of embodiment of the present invention, the passing of control from one loop controller to another via respective loop devices is done as seamlessly as possible. A transition from a first state to a second state or vice versa can be implemented via a standard communication protocol, for example according to a layered communication protocol based on the Open Interconnect model.

A safety loop system can be implemented with redundancy functionality by introducing the loop device according to the present invention at appropriate locations in a loop system. In smoke a fire detections systems, or burglar alarm systems it is important to locate the loop device at correct locations enhancing the survival aspect of the loop system in case of problems with parts of the loop system, such as power failure, fire, tampering with the loop components etc. In all these cases the loop device according to the present invention can enable any connected loop segment to be controlled by another loop controller or bypass a section of the loop if necessary. According to yet another aspect of the present invention, a first loop device can be connected to a second loop device by interconnecting the controller data ports 4, 6 and controller port 3 to corresponding controller data ports 4, 6 and controller port 3 of the second loop device. The physical loop sections connected to the first loop device (ports 5, 7) is then connected in a controllable manner to the physical loop sections connected to the second controller (ports 5, 7). In this manner a loop segment can be bypassed, part of the loop segment can be bypassed etc. As readily can be seen, the loop device according to the present invention provides a possibility to create any type of controllable topology of a loop system, which can be dynamically reconfigured if necessary. The loop device according to the present invention simplifies the problem of providing redundancy in a loop system. Firstly, it is the same type of component (the loop device itself) that is applied for the purpose of achieving redundancy. Secondly, the loop device can be manufactured as an integrated circuitry as known to a person skilled in the art providing high volumes of the loop device and hence reduction of cost for implementing redundancy in the loop system. Another important aspect of the safety issue of the loop system itself is maintaining power to all units when for example the loop is reconfigured due to a fire in a section etc. A loop device according to the present invention may power the sections of the loop it is connected to, and the other connected devices may receive power via one or more ports of the loop device. It is within the scope of the present invention to use any power system providing the necessary means for maintaining power through out the loop during operation and when the loop configuration is changed.

Figure 1a illustrates another example of embodiment of a device according to the present invention. In the loop device illustrated in figure 1a, there are three relays: 8, 9a, and 10. The device of figure 1a is similar to the device of figure 1, but the electrical connection of the loop data port 5 to the loop data port 7 is made by relay 9a provided between said ports 5 and 7, as illustrated in figure 1a. The relay 9a may be controlled by a control signal from the internal controller 2, and the electrical connection of the loop data port 5 to the loop data port 7 by means of the relay 9a may be achieved regardless of the state of the relays 8 and 10. The loop device of figure 1a may further comprise an interface 14 connected to the line(s) between port 5 and relay 8, in particular to the portion of said line(s) between relay 9a and relay 8, as illustrated. The interface 14 is further connectable to the internal controller 2 via a connection 15, as also illustrated in figure 1a. The connection 15 may be embodied as a galvanically isolated connection. In the loop device of figure 1a, the internal controller 2 is able to do two-way communication (write/listen) on the loop data port 7, and listen on the loop data port 5 through the interface 14 and the connection 15. In this embodiment, if relay 9a is closed, it may also write to port 5.

Figure 2a illustrates various states (denoted 2a-X) of a system according to an embodiment of the present invention, which system includes a plurality of devices of the type illustrated in fig. 1a. In figure 2a, similar reference numbers denote similar elements as in figure 2.

In 2a-3 (including the loop between contacts 303-401), the control of the loop is shared between two loop controllers 300 and 400, and they may at the same time communicate, via internal controller 2 and controller port 3 of their respective loop devices 304 and 402. The loop sections 54 and 55 are galvanically isolated.

In 2a-4 (501-551), a loop controller ("Primary", not illustrated) connected to contact 501 is in full control of the loop, which loop has a broken (or shorted and made broken by disconnection on each side of the short) line in section 56. With the relay 9a in loop device 502 closed, the loop device 552 in listening-only mode may also be able to listen to the "shadowed" units on the part of section 56 between the break and device 502. In 2a-5 (601-651), we show the same for the other side's broken loop section 59. In this case, the relay 9a in device 602 is closed for an additional reason: the internal controller 2 in device 602 needs the connection to be able to talk to the internal controller 2 in device 652.

In 2a-6 (701-751), the loop is broken on both sides. A loop controller connected to contact 702 and a loop controller connected at 752 are both Primary until the situation is rectified by automatic detection or via external commands simultaneously reaching the contact 701 and the contact 751 from a common external controller (not indicated).

In 2a-7 (801-851), there is a collision. Both a loop controller connected at 801 and a loop controller connected at 851 cannot at the same time control the loop. This situation may be rectified by collision detection software and/or hardware, and one of the loop controllers will withdraw. This is controlled by a specific configuration of each loop device 802 and 852, so that one loop controller would withdraw for later arbitration. This will fall down to the situation type illustrated in 2a-1 (101-201). Observe that a system connected like this is always able to communicate from one internal controller 2 to another internal controller 2, also when only one loop controller (e.g. 100) is in charge of loop control.

It should be noted that in 2a-3 (303-401) in 2a and the corresponding portion in figure 2, sharing the loop like this may be an advantage for concurrent "raising of the loop". This means repetitively to tell the outermost loop unit to power the next part, since initially it will not have power on this side (as seen in the direction between opposite loop devices in figures 2 and 2a, e.g. 304-402). This causes the next loop unit to be seen etc. This is similar to standard loop raising. However, here the other side's internal controller 2 in loop device 304, or 402's internal controller 2 may finally be seen. The internal controllers 2 respond like standard loop units. Then, one of the sides may pass control of the raised loop units to the other side. An example is that section 55 is handed over to 304, causing one side (e.g. 304) to be Primary, and the other Secondary.

In the device of figure 1 and also in the device of figure 1a, each port 4, 5, 6, and 7 comprises wire pairs (illustrated as one shadowed line and one non-shadowed line) carrying both power and communication on each of the four pairs. Loop units in sections 50 and 51 (e.g.) in figure 2 may thus both get powered and communicate via two single wires.

As mentioned, the internal controller 2 in figure 1 (and also in figure 1a) may be able to communicate and respond on the loop like any of the loop units in sections 50 and 51 (e.g.). Communication-wise, the internal controller only differs in "address" and "type" compared to other loop units.

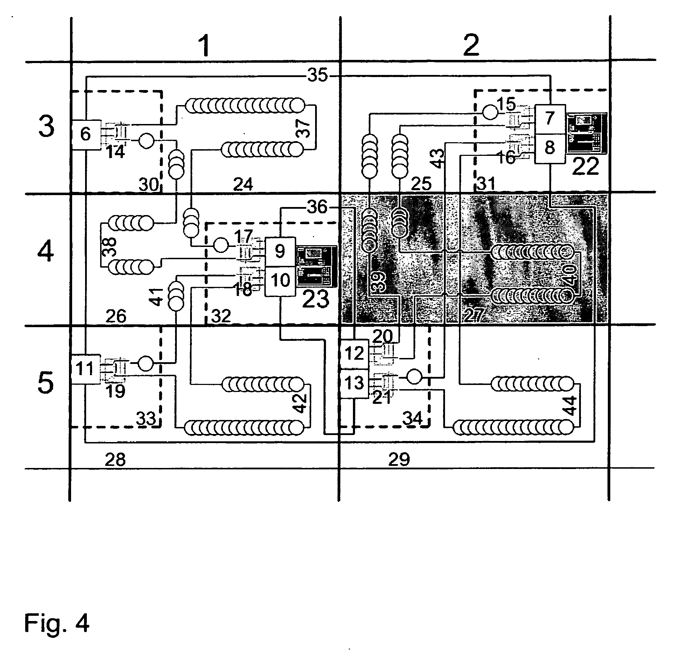

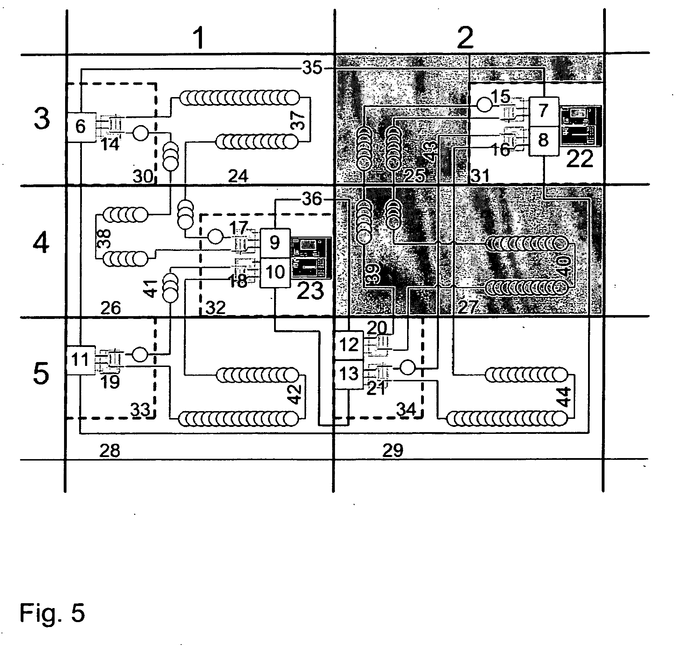

Figure 3 illustrates an example of a layout of a control loop according to the present invention, figure 4 illustrates an example of fire in a section of the system in figure 3, and figure 5 illustrates another example of fire in sections in figure 3. In figures 3-5, control from one part of a system may be taken over by a hot standby system. The degree of "hotness", i.e. the degree of synchronism or lock-step is not covered here, only to say that the loop should preferably be without power for such a short time that the connected loop units will not have to be restarted, and thus "without interruption" be able to deliver events like alarms. It should be noted that the numbering in figures 3-5 does not correlate with the prior figures.

6-13 are loop controllers. 14-21 are loop devices of the present invention. 1 and 2 are sections of for instance a ship, and 3-5 are decks, often "vertical fire zones". Four two-wired loops (communication modulated onto power) with fire detector loop units in loop sections 37-44 are controlled from fire panels 22 and 23. Cells 24-34 provide protected spaces. The fire panels 22 and 23 may communicate in a ring, and/or with connected additional system (not shown). Loop controllers like 7 and 8 are connected to a part of the loop sections (39-40 and 43-44) as well as to the fire panel 22. As illustrated in figure 3, fire panel 22 and loop controllers 7 and 8 may be regarded as Primary controllers, where access to the loop is controlled by loop devices 15 and 16. All loop controllers are connected point to point in a logical ring, which physically is a bus (so it is not necessary in this embodiment for the fire panel 22 to communicate with loop controller 11 with routing or protocol handling in loop controllers 7 and 6) that will allow a segment to be shorted with no connected units lost (local disconnection or transformer coupled etc.). The ring 35 includes in turn fire panel 22, and loop controllers 7, 6, 11, and 8 back to panel 22, while ring 36 includes in turn fire panel 23, and loop controllers 9, 12, 13, and 10 back to panel 23. This allows for dislocality of access points to the fire loops. The fire panel 22 in one situation is Primary to loops controlled via loop controllers 7 and 8, and Secondary to loops controlled via loop controllers 6 and 11. Likewise, in the same situation, the fire panel 23 is Primary to loops controlled via loop controllers 9 and 10, and secondary to loops controlled via loop controllers 12 and 13. Observe again that the four loops in mind here are controlled with any combination of exclusively loop controller 7 or 12 (i.e. 7 as Primary or 12 as Primary), 8 or 13, 9 or 6, or 10 or 11. The system is arranged to that total destruction of any one cell 24-34 should not cause any other cell to malfunction. It should be noted that a defined section of a fire loop could have zero loop units. For instance, loop units in section 39 could be replaced by a cable (or any practical number of loop units). In figure 3, there is no fire, so any fire panel may control any loop of fire detectors.

In figure.4, a fire has destroyed cell 27. Loop units in loop sections 39 and 40 as well as two cables going through the cell are lost. Changes compared to figure 3 include:
- Loop device 15 (or loop controller 7) would still be Primary, but the loop aspect is lost.
- Loop devices 16 and 20 are Secondary, with connection to the burning cell disconnected.
- Fire panel 22 may now communicate with loop controller 11 only via upper part of ring 35.
- Fire panel 23 may now communicate with loop controller 12 only via lower part of ring 36.
- Fire panel 23 takes over Primary control of section 44, via loop device 21 and loop controller 13.

In figure 5, a fire has destroyed two cells 27 and 25. The fire panel 22 is completely isolated, but the fire panel 23 takes over all command. So, the loop device 14 plus loop devices 17-21 have become Primary. The system may infer this configuration without any communication with fire panel 22, and without any operative down-time of the system.

Other scenarios may also be envisaged with the suggested system configuration, and examples include the complete destruction of cell 31 or 32, which would cause a complete takeover by the other cell 32 or 31, respectively.

It should be noted that loop devices like 15, loop controllers like 7 and fire panels like 22 may, any one of them, control access to the loop. They are not required to arbitrate with any other controlling unit, even if this may be attempted. This is added to the basic redundancy already covered in the concept of a loop, where one broken segment will cause no lost units.

Since a loop section like 39-49 cannot be controlled by more than one Primary at a time, the present system gracefully controls access of the controlling Primary. One could say that the loop devices 14-21 may function as automatic "access watchdogs".

With respect to algorithms for doing the mentioned access control, any algorithm that fulfils the requirement would do. However, the more "safety critical" the system is, the more there is a need to specify the requirements in a language designed for later formal verification. Promela or CSP may be examples of such languages.

The person skilled in the art realized that the present invention by no means is limited to the embodiments described above. On the contrary, many modifications and variations are possible within the scope of the appended claims.

## Claims

1. A loop device comprising an interface function adapted to physical communication sections and communication protocols of an instrumentation loop system or a safety loop system or similar type of loop system, **characterized in that** the loop device can be configured to be in a first state or a second state, the loop device comprises:
the interface function of the loop device comprises a first loop data port (7) providing a connection terminal for a specific physical communication section of the loop connected to the loop device, a second loop data port (5) providing a connection terminal for another specific physical communication section of the loop connected to the loop device, and
the interface function of the loop device comprises further a first controller data port (6), a second controller data port (4), and a controller port (3) in communication with an internal loop device controller (2),
at least two relays (8, 10) which can respectively be controlled by respective control signals from the internal controller (2), wherein the at least two relays (8, 10) provides a connection of physical communication channels between respective data ports (4, 5, 6, 7), wherein the physical communication channels provided for by the at least two relays (8, 10) is from the set of combinations comprising:
a) the second loop data port (5) is electrically connected to the second controller data port (4),
b) the first loop data port (7) is electrically connected to the first controller data port (6),
c) the second loop data port (5) is electrically connected to the first loop data port (7) via an internal connection (9),
d) the second loop data port (5) is electrically connected to the second controller data port (4) and the first loop data port (7) is electrically connected to the first controller data port (6) at the same time,
whenever the loop device is configured to be in the first state the connection alternative d) is used, when the loop device is configured to be in the second state connection alternative c) is used.

2. The loop device according to claim 1, wherein the respective first controller data port (6), the second controller data port (4) and the controller port (3) is in communication with respective corresponding ports of a loop controller system.

3. The loop device according to claim 1, wherein the respective first controller data port (6), the second controller data port (4) and the controller port (3) is in communication with respective corresponding ports of an instrumentation system.

4. The loop device according to claim 1, wherein the respective first controller data port (6), the second controller data port (4) and the controller port (3) is in communication with respective corresponding ports of a safety device or any type of electronic device.

5. The loop device according to claim 1, wherein the internal controller (2) is arranged to listen to data traffic being present in the loop data port (7), or any other port arranged in the loop device to be in communication with physical communication sections of the loop.

6. The loop device according to claim 1, wherein the internal controller (2) is arranged with an address, and is arranged to identify this address in data traffic being present in the loop data port (7), or any other port arranged in the loop device to be in communication with physical communication sections of the loop.

7. The loop device according to claim 1, wherein the internal loop device controller (2) is arranged to communicate with other in the loop connected devices over the respective loop data port (7) and the loop data port (5) according to a standard communication protocol, and wherein optionally the standard communication protocol arranged in the internal controller (2) is a layered communication protocol.

8. The loop device according to claim 1, wherein the internal controller (2) is adapted to analyse data in the data traffic being present in the loop data port (7) or in any other port in the loop device, and wherein the analysis can trigger a transition from the first state to the second state, or vice versa, dependent on a status of the analysed data and the initial state of the loop device.

9. The loop device according to claim 8, wherein the internal controller (2) is arranged to provide arbitration between at least two loop controllers when each respective loop device connected to each respective loop controller each respectively is configured in the first state.

10. The loop device according to claim 8, wherein the analysis comprises distinguishing between a short circuit condition in the loop and a physically broken loop in the respective physical communication section connected to each respective loop data port (5, 7).

11. The loop device according to claim 1, wherein the loop controller connected to the loop device is for at least one of a fire alarm system, a processing plant system, and a burglar alarm system.

12. The loop device according to claim 1, wherein said internal connection is configured as a relay (9a) controllable by a control signal from the internal controller (2).

13. The loop device according to claim 1, wherein the loop device is configured to be releasably connected in between a cable or a wireless communication channel or any other physical means for constituting the loop and a connector of the loop controller in communication with this specific loop device.

14. The loop device according to any previous claim manufactured as an integrated circuit, wherein optionally the integrated circuit is located as part of a loop controller system, an instrumentation system, a burglar alarm system, a safety device or similar device or system.

15. The loop device according to claim 1, wherein the internal loop device controller (2) is located externally relative to the loop device, and wherein signals from the internal loop device controller (2) is communicated to other parts of the loop device via the controller port (3).

16. The loop device according to claim 1, wherein the configuration of the loop device to be in the first state or the second state is provided for by switch settings communicated to the internal loop device controller (2) via the controller port (3) or via a separate input on the loop device.

17. A safety loop system comprising a plurality of interconnected loops and loop devices according to any claim 1 to 16.

18. The safety loop system according to claim 17, wherein at least one of the pluralities of loop devices is designated to be in the first state when the safety loop system is installed or is being initialized to this state at power up of the safety loop system.

19. The safety loop system according to claim 17, wherein a loop device is adapted to make itself to be in the first state if a physical communication loop or section of a communication loop looses power.

20. The safety loop system according to claim 17, wherein a loop device configured to be in the second state arranged after, or downstream from, a loop device configured to be in the first state is adapted to identify that the controller connected to the loop device being in the first state is out of operation if a periodic signal issued via or from this loop device stops arriving at the loop data port (7) of the loop device being configured to be in the second state, and when this situation is identified the loop device being configured to be in the second state changes state to the first state.

21. The safety loop system according to claim 17, wherein a loop controller connected to a loop device being configured to be in the second state is adapted to request information about operational status from other loop controllers in the system by issuing an interrogating command as part of a communication protocol implemented in the internal loop device controller (2) in the loop device, and by analysing responses from respective loop devices in the loop system the loop device may change state form the first state to the second state, or vice versa.

22. The safety loop system according to claim 17, wherein the safety loop system is installed on board a ship, and wherein respective safety loops are arranged in respective fire proof sections.

## Patentansprüche

1. Loopvorrichtung, die eine Schnittstellenfunktion umfasst, welche an physische xommunikationsabschnitte und Kommunikationsprotokolle eines Instrumentierungsloopsystems oder eines Sicherheitsloopsystems oder einer ähnlichen Art von Loopsystem angepasst ist, **dadurch gekennzeichnet, dass** die Loopvorrichtung so ausgelegt werden kann, dass sie in einem ersten Zustand oder einem zweiten Zustand ist, wobei die Loopvorrichtung Folgendes umfasst:
die Schnittstellenfunktion der Loopvorrichtung umfasst einen ersten Loopdatenport (7), der eine Anschlussstelle für einen speziellen physischen Kommunikationsabschnitt des Regelkreises vorsieht, der an die Loopvorrichtung angeschlossen ist, einen zweiten Loopdatenport (5), der eine Anschlussstelle für einen weiteren speziellen physischen Kommunikationsabschnitt des Regelkreises vorsieht, der mit der Loopvorrichtung verbunden ist, und
die Schnittstellenfunktion der Loopvorrichtung umfasst ferner einen ersten Controllerdatenport (6), einen zweiten Controllerdatenport (4) und einen Controllerport (3) in Verbindung mit einem internen Loopvorrichtungscontroller (2),
mindestens zwei Relais (8, 10), die jeweils durch entsprechende Steuerungssignale vom internen Controller (2) gesteuert werden können, wobei die mindestens zwei Relais (8, 10) für eine Verbindung von physischen Kommunikationskanälen zwischen entsprechenden Datenports (4, 5, 6, 7) sorgen, wobei die physischen Kommunikationskanäle, die von den die mindestens zwei Relais (8, 10) vorgesehen sind, aus dem Satz von Kombinationen stammen, der Folgendes umfasst:
a) der zweite Loopdatenport (5) ist elektrisch mit dem zweiten Controllerdatenport (4) verbunden,
b) der erste Loopdatenport (7) ist elektrisch mit dem ersten Controllerdatenport (6) verbunden,
c) der zweite Loopdatenport (5) ist elektrisch mit dem ersten Loopdatenport (7) über eine interne Verbindung (9) verbunden,
d) der zweite Loopdatenport (5) ist elektrisch mit dem zweiten Controllerdatenport (4) verbunden, und der erste Loopdatenport (7) ist gleichzeitig elektrisch mit dem ersten Controllerdatenport (6) verbunden,
wenn die Loopvorrichtung dafür eingerichtet ist, sich im ersten zustand zu befinden, wird die Verbindungsalternative d) verwendet; wenn die Loopvorrichtung dafür eingerichtet ist, sich im zweiten Zustand zu befinden, wird die Verbindungsalternative c) verwendet.

2. Loopvorrichtung nach Anspruch 1, wobei der jeweilige erste Controllerdatenport (6), der zweite Controllerdatenport (4) und der Controllerport (3) in Verbindung mit entsprechenden Ports eines Loopcontrollersystems stehen.

3. Loopvorrichtung nach Anspruch 1, wobei der jeweilige erste Controllerdatenport (6), der zweite Controllerdatenport (4) und der Controllerport (3) in Verbindung mit entsprechenden Ports eines Instrumentierungssystems stehen.

4. Loopvorrichtung nach Anspruch 1, wobei der jeweilige erste Controllerdatenport (6), der zweite Controllerdatenport (4) und der Controllerport (3) in Verbindung mit entsprechenden Ports einer Sicherheitsvorrichtung oder einer beliebigen Art von elektronischer Vorrichtung stehen,

5. Loopvorrichtung nach Anspruch 1, wobei der interne Controller (2) dafür ausgelegt ist, den Datenverkehr abzuhören, der im Loopdatenport (7) auftritt oder in einem anderen Port, der in der Loopvorrichtung angeordnet ist, um in Verbindung mit physischen Kommunikationsabschnitten des Loops zu stehen.

6. Loopvorrichtung nach Anspruch 1, wobei der interne Controller (2) mit einer Adresse versehen ist und dafür ausgelegt ist, diese Adresse im Datenverkehr, der im Loopdatenport (7) oder in einem anderen Port auftritt, zu identifizieren, um in Verbindung mit physischen xommunikationsabschnitten des Loops zu stehen.

7. Loopvorrichtung nach Anspruch 1, wobei der interne
Controller (2) der Loopvorrichtung zum Kommunizieren mit anderen, im Regelkreis angeschlossenen Vorrichtungen über den jeweiligen Loopdatenport (7) und den Loopdatenport (5) gemäß einem Standardkommunikationsprotokoll ausgelegt ist und wobei optional das Standardkommunikationsprotokoll, welches im internen Controller (2) vorgesehen ist, ein mehrschichtiges Kommunikationsprotokoll ist.

8. Loopvorrichtung nach Anspruch 1, wobei der interne Controller (2) zum Analysieren von Daten im Datenverkehr ausgelegt ist, der im Loopdatenport (7) oder in einem anderen Port in der Loopvorrichtung auftritt, und wobei die Analyse einen Übergang vom ersten zustand in den zweiten Zustand oder umgekehrt auslösen kann, je nach einem Status der analysierten Daten und dem Anfangszustand der Loopvorrichtung.

9. Loopvorrichtung nach Anspruch 8, wobei der interne Controller (2) zur Entscheidung zwischen mindestens zwei Loopcontrollern ausgelegt ist, wenn die jeweilige Loopvorrichtung, die mit jedem entsprechenden Loopcontroller verbunden ist, jeweils für den ersten Zustand eingerichtet ist.

10. Loopvorrichtung nach Anspruch 8, wobei die Analyse das Unterscheiden zwischen einem Kurzschlusszustand in dem Regelkreis und einem physisch unterbrochenen Regelkreis in dem entsprechenden physischen Kommunikationsabschnitt umfasst, der mit jedem entsprechenden Loopdatenport (5, 7) verbunden ist.

11. Loopvorrichtung nach Anspruch 1, wobei der Loopcontroller, der an die Loopvorrichtung angeschlossen ist, für ein Feuermeldesystem, ein verarbeitungsanlagensystem und/oder ein Einbruchsalarmsystem bestimmt ist.

12. Loopvorrichtung nach Anspruch 1, wobei die interne Verbindung als Relais (9a) ausgelegt ist, das von einem Steuersignal vom internen Controller (2) gesteuert werden kann.

13. Loopvorrichtung nach Anspruch 1, wobei die Loopvorrichtung zum lösbaren Anschluss zwischen einem Kabel oder einem drahtlosen xommunikativnskanal oder einem anderen physischen Mittel zum Bilden des Regelkreises und eines verbinders des Loopcontrollers in Kommunikation mit dieser speziellen Loopvorrichtung ausgelegt ist.

14. Loopvorrichtung nach einem der vorherigen Ansprüche, die als integrierte Schaltung hergestellt ist, wobei optional die integrierte Schaltung als Teil eines Loopcontrollersystems, eines Instrumentierungssystems, eines Einbruchsalarmsystems, einer Sicherheitsvorrichtung oder einer ähnlichen Vorrichtung oder eines ähnlichen Systems angeordnet ist.

15. Loopvorrichtung nach Anspruch 1, wobei der interne Controller (2) der Loopvorrichtung extern bezüglich der Loopvorrichtung angeordnet ist und wobei Signale vom internen Controller (2) der Loopvorrichtung anderen Teilen der Loopvorrichtung über den Controllerport (3) übermittelt werden.

16. Loopvorrichtung nach Anspruch 1, wobei die Konfiguration der Lvopvorrichtung, die im ersten Zustand oder im zweiten Zustand sein soll, durch Schaltereinstellungen vorgesehen ist, welche dem internen Controller (2) der Loopvorrivhtung über den Controllerport (3) oder über einen separaten Eingang an der Loopvorrichtung übermittelt werden.

17. Sicherheitsloopsystem, das mehrere miteinander verbundene Regelkreise und Loopvorrichtungen nach einem der Ansprüche 1 bis 16 umfasst.

18. Sicherheitsloopsystem nach Anspruch 17, wobei mindestens eine der mehreren Loopvorrichtungen dem ersten Zustand zugeordnet ist, wenn das Sicherheitsloopsystem installiert ist oder in diesen Zustand beim Hochfahren des Sicherheitsloopsystems initialisiert ist.

19. Sicherheitsloopsystem nach Anspruch 17, wobei eine Loopvorrichtung dafür ausgelegt ist, sich selbst in den ersten Zustand zu versetzen, wenn ein physischer Kommunikationsloop oder ein Abschnitt eines Kommunikationsloops nicht mehr mit Energie versorgt ist.

20. Sicherheitsloopsystem nach Anspruch 17, wobei eine Loopvorrichtung, die für den zweiten Zustand konfiguriert ist und nach oder hinter einer Loopvorrichtung angeordnet ist, welche für den ersten Zustand konfiguriert ist, für die Identifizierung ausgelegt ist, dass der Controller, der mit der Loopvorrichtung verbunden ist, die sich im ersten Zustand befindet, außer Betrieb ist, wenn ein periodisches Signal, das über diese Loopvorrichtung oder von derselben abgegeben wird, stoppt, wenn es am Loopdatenport (7) der Loopvorrichtung ankommt, welche für den zweiten Zustand konfiguriert ist, und wenn diese Situation identifiziert wird, die Loopvorrichtung, die für den zweiten Zustand konfiguriert ist, ihren Zustand in den ersten Zustand ändert.

21. Sicherheitsloopsystem nach Anspruch 17, wobei ein Loopcontroller, der mit einer Loopvorrichtung verbunden ist, welche für den zweiten zustand konfiguriert ist, dafür ausgelegt ist, Informationen über den Betriebszustand von anderen Loopcontrollern im System anzufordern, indem sie einen Abfragebefehl als Teil eines Kommunikationsprotokolls ausgibt, das im internen Controller (2) der Loopvorrichtung in der Loopvorrichtung implementiert ist, und durch Analysieren der Reaktionen von den jeweiligen Loopvorrichtungen im Loopsystem kann die Loopvorrichtung ihren Zustand vom ersten Zustand in den zweiten Zustand oder umgekehrt ändern.

22. Sicherheitsloopsystem nach Anspruch 17, wobei das Sicherheitsloopsystem an Bord eines Schiffes installiert ist und wobei die jeweiligen Sicherheitsloops in den jeweiligen feuersicheren Abschnitten angeordnet sind.

## Revendications

1. Dispositif de boucle comprenant une fonction d'interface adaptée à des sections de communication physique et à des protocoles de communication d'un système de boucle d'instrumentation ou d'un système de boucle de sécurité ou d'un système de boucle de type similaire, **caractérisé en ce que** le dispositif de boucle peut être configuré pour être dans un premier état ou dans un second état, le dispositif de boucle comprenant :
la fonction d'interface du dispositif de boucle comprend un premier port de données de boucle (7) offrant une borne de connexion pour une section de communication physique spécifique de la boucle connectée au dispositif de boucle, un second port de données de boucle (5) offrant une borne de connexion pour une autre section de communication physique spécifique de la boucle connectée au dispositif de boucle, et
la fonction d'interface du dispositif de boucle comprend en outre un premier port de données de boucle (6), un second port de données de contrôleur (4) et un port de contrôleur (3) en communication avec un contrôleur de dispositif de boucle interne (2),
au moins deux relais (8, 10) qui peuvent respectivement être contrôlés par des signaux de contrôle respectifs provenant du contrôleur interne (2), où les au moins deux relais (8, 10) fournissent une connexion de canaux de communication physiques entre des ports de données respectifs (4, 5, 6, 7), où les canaux de communication physiques prévus par les au moins deux relais (8, 10) font partie du jeu de combinaisons comprenant :
a) le second port de données de boucle (5) est électriquement connecté au second port de données de contrôleur (4),
b) le premier port de données de boucle (7) est électriquement connecté au premier port de données de contrôleur (6),
c) le second port de données de boucle (5) est électriquement connecté au premier port de données de boucle (7) par l'intermédiaire d'une connexion interne (9),
d) le second port de données de boucle (5) est électriquement connecté au second port de données de contrôleur (4) et, en même temps, le premier port de données de boucle (7) est électriquement connecté au premier port de données de contrôleur (6),
à chaque fois que le dispositif de boucle est configuré pour être dans le premier état, l'alternative de connexion d) est utilisée, lorsque le dispositif de boucle est configuré pour être dans le second état, l'alternative de connexion c) est utilisée.

2. Dispositif de boucle selon la revendication 1, dans lequel le premier port de données de contrôleur (6), le second port de données de contrôleur (4) et le port de contrôleur (3) sont respectivement en communication avec les ports correspondants respectifs d'un système de contrôleur de boucle.

3. Dispositif de boucle selon la revendication 1, dans lequel le premier port de données de contrôleur (6), le second port de données de contrôleur (4) et le port de contrôleur (3) sont respectivement en communication avec les ports correspondants respectifs d'un système d'instrumentation.

4. Dispositif de boucle selon la revendication 1, dans lequel le premier port de données de contrôleur (6), le second port de données de contrôleur (4) et le port de contrôleur (3) sont respectivement en communication avec les ports correspondants respectifs d'un dispositif de sécurité ou de tout type de dispositif électronique.

5. Dispositif de boucle selon la revendication 1, dans lequel le contrôleur interne (2) est conçu pour écouter le trafic de données présent au niveau du port de données de boucle (7) ou de tout autre port conçu dans le dispositif de boucle pour être en communication avec des sections de communication physiques de la boucle.

6. Dispositif de boucle selon la revendication 1, dans lequel le contrôleur interne (2) est conçu avec une adresse et est conçu pour identifier cette adresse dans le trafic de données présent au niveau du port de données de boucle (7) ou de tout autre port conçu dans le dispositif de boucle pour être en communication avec des sections de communication physiques de la boucle.

7. Dispositif de boucle selon la revendication 1, dans lequel le contrôleur de dispositif de boucle interne (2) est conçu pour communiquer avec d'autres dispositifs parmi les dispositifs connectés dans la boucle sur le port de données de boucle (7) et le port de données de boucle (5) respectifs suivant un protocole de communication standard, et où, facultativement, le protocole de communication standard conçu dans le contrôleur interne (2) est un protocole de communication en couche.

8. Dispositif de boucle selon la revendication 1, dans lequel le contrôleur interne (2) est conçu pour analyser des données dans le trafic de données présent au niveau du port de données de boucle (7) ou de tout autre port dans le dispositif de boucle, et où l'analyse peut déclencher une transition du premier état au second état, ou vice versa, en fonction d'un statut des données analysées et de l'état initial du dispositif de boucle.

9. Dispositif de boucle selon la revendication 8, dans lequel le contrôleur interne (2) est conçu pour effectuer un arbitrage entre au moins deux contrôleurs de boucle lorsque chaque dispositif de boucle respectif connecté à chaque contrôleur de boucle respectif est respectivement configuré dans le premier état.

10. Dispositif de boucle selon la revendication 8, dans lequel l'analyse comprend le fait de faire la différence entre une condition de court-circuit dans la boucle et une boucle physiquement rompue dans la section de communication physique respective connectée à chaque port de données de boucle respectif (5,7).

11. Dispositif de boucle selon la revendication 1, dans lequel le contrôleur de boucle connecté au dispositif de boucle est destiné à au moins un système parmi un système d'alarme incendie, un système d'installation de traitement et un système d'alarme antivol.

12. Dispositif de boucle selon la revendication 1, dans lequel ladite connexion interne est configurée comme un relais (9a) contrôlable par un signal de commande depuis le contrôleur interne (2).

13. Dispositif de boucle selon la revendication 1, dans lequel le dispositif de boucle est configuré pour être connecté de manière libérable entre un canal de communication avec ou sans fil ou tout autre moyen physique pour constituer la boucle et un connecteur du contrôleur de boucle en communication avec ce dispositif de boucle spécifique.

14. Dispositif de boucle selon l'une quelconque des revendications précédentes fabriqué sous la forme d'un circuit intégré, dans lequel le circuit intégré fait facultativement partie d'un système de contrôleur de boucle, d'un système d'instrumentation, d'un système d'alarme antivol, d'un dispositif de sécurité ou d'un dispositif ou système similaire.

15. Dispositif de boucle selon la revendication 1, dans lequel le contrôleur de dispositif de boucle interne (2) est situé à l'extérieur par rapport au dispositif de boucle, et où des signaux provenant du contrôleur de dispositif de boucle interne (2) sont communiqués aux autres parties du dispositif de boucle par l'intermédiaire du port de contrôleur (3).

16. Dispositif de boucle selon la revendication 1, dans lequel la configuration du dispositif de boucle pour qu'il soit dans le premier état ou dans le second état est prévue par des paramétrages de commutateur communiqués au contrôleur de dispositif de boucle interne (2) par l'intermédiaire du port de contrôleur (3) ou d'une entrée séparée située sur le dispositif de boucle.

17. Système de boucle de sécurité comprenant une pluralité de boucles interconnectées et de dispositifs de boucle selon l'une quelconque des revendications 1 à 16.

18. Système de boucle de sécurité selon la revendication 17, dans lequel au moins un dispositif de la pluralité de dispositifs de boucle est conçu pour être dans le premier état lorsque le système de boucle de sécurité est installé ou est initialisé dans cet état lors de la mise sous tension du système de boucle de sécurité.

19. Système de boucle de sécurité selon la revendication 17, dans lequel un dispositif de boucle est conçu pour se placer lui-même dans le premier état si une boucle de communication physique ou une section d'une boucle de communication perd de la puissance.

20. Système de boucle de sécurité selon la revendication 17, dans lequel un dispositif de boucle configuré pour être dans le second état disposé après, ou en aval de, un dispositif de boucle configuré pour être dans le premier état, est conçu pour identifier le fait que le contrôleur connecté au dispositif de boucle se trouvant dans le premier état est hors service si un signal périodique délivré par l'intermédiaire de, ou depuis, ce dispositif de boucle s'arrête en arrivant au port de données de boucle (7) du dispositif de boucle étant configuré pour être dans le second état, et lorsque cette situation est identifiée, le dispositif de boucle étant configuré pour être dans le second état change d'état pour le premier état.

21. Système de boucle de sécurité selon la revendication 17, dans lequel un contrôleur de boucle connecté à un dispositif de boucle étant configuré pour être dans le second état est conçu pour demander des informations concernant le statut opérationnel auprès d'autres contrôleurs de boucle dans le système en émettant une commande d'interrogation faisant partie d'un protocole de communication implémenté dans le contrôleur de dispositif de boucle interne (2) dans le dispositif de boucle, et en analysant les réponses provenant des dispositifs de boucle respectifs dans le système de boucle, le dispositif de boucle peut changer d'état du premier état au second état, ou vice versa.

22. Système de boucle de sécurité selon la revendication 17, dans lequel le système de boucle de sécurité est installé à bord d'un navire, et dans lequel les boucles de sécurité respectives sont placées dans des sections ignifuges respectives.
